# EUROPÄISCHE PATENTSCHRIFT

(11) **EP 2 265 851 B1**
(45) Veröffentlichungstag und Bekanntmachung des Hinweises auf die Patenterteilung: **10.06.2015**
(21) Anmeldenummer: 09730795.3
(22) Anmeldetag: 25.02.2009
(51) Int. Cl.: F16L 37/091, F16L 37/098

(54) **KUPPLUNGSEINRICHTUNG**
COUPLING UNIT
DISPOSITIF D'ACCOUPLEMENT

(30) Priorität: 10.04.2008 DE 102008018426
(43) Veröffentlichungstag der Anmeldung: 29.12.2010
(73) Patentinhaber: MAHLE International GmbH, 70376 Stuttgart (DE)
(72) Erfinder: AMMON, Edgar, 73630 Remshalden (DE); FALLSCHEER, Thomas, 70329 Stuttgart (DE); FROMMER, Ralf, 70734 Fellbach (DE); OVERHEU, Annett, 71686 Remseck (DE); PRÖTTEL, Thomas, 73728 Esslingen (DE); STEHLIG, Jürgen, 72654 Neckartenzlingen (DE)
(74) Vertreter: BRP Renaud & Partner mbB Rechtsanwälte Patentanwälte Steuerberater
(86) Internationale Anmeldenummer: PCT/EP2009/052191
(87) Internationale Veröffentlichungsnummer: WO 2009/124805

(56) Entgegenhaltungen:
- WO-A-2007/004880
- US-A- 3 339 944
- US-B1- 6 231 090

## Beschreibung

Die vorliegende Erfindung betrifft eine Kupplungseinrichtung zum Verbinden einer Fluidleitung mit einer anderen Fluidleitung oder mit einem Fluidanschluss, (siehe z.B. WO 2007/004880 A2, dem Oberbegriff entsprechend).

In vielen unterschiedlichen Anwendungsformen müssen fluidführende Leitungen, also Fluidleitungen mit anderen Fluidleitungen oder mit Anschlüssen, die zu einer Fluidquelle oder zu einer Fluidsenke führen, kommunizierend verbunden werden. Hierzu sind vielfältige Verbindungstechniken, insbesondere Kupplungseinrichtungen bekannt. Bei bestimmten Anwendungen steht wenig Bauraum zum Herstellen bzw. zum Lösen einer derartigen Verbindung zur Verfügung. Des Weiteren kann es für eine Serienfertigung erwünscht sein, das Herstellen der Verbindung möglichst einfach zu gestalten. Insbesondere bei Kraftfahrzeugen kann es erforderlich sein, gasführende Leitungen in einem Motorraum mit anderen gasführenden Leitungen oder mit entsprechenden Anschlüssen zu verbinden. Eine weitere Kupplungseinrichtung ist aus der US 3, 339, 944 A bekannt.

Die vorliegende Erfindung beschäftigt sich mit dem Problem, für eine Kupplungseinrichtung der eingangs genannten Art eine verbesserte Ausführungsform anzugeben, die sich insbesondere dadurch auszeichnet, dass ein Einkuppeln zum Herstellen der Verbindung besonders einfach auch bei beengten Platzverhältnissen realisierbar ist, wobei insbesondere eine gesicherte Verbindung realisierbar sein soll. Des Weiteren ist eine preiswerte Herstellbarkeit der Kupplungseinrichtung erwünscht.

Erfindungsgemäß wird dieses Problem durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die Kupplungseinrichtung mit einer Hülse, zumindest einem Rohrabschnitt und wenigstens einem zwischen Hülse und Rohrabschnitt angeordneten Rastring auszustatten, wobei diese Komponenten so ausgestaltet und aufeinander abgestimmt sind, dass der Rohrabschnitt in einer ersten Drehlage zum Einkuppeln axial in die Hülse einsteckbar ist und im eingesteckten Zustand durch den Rastring gegen axiales Herausziehen gesichert ist, wobei der Rohrabschnitt in einer zweiten Drehlage entsichert ist und aus der Hülse axial herausziehbar ist. Mit anderen Worten, die Verbindung wird durch axiales Einstecken des Rohrabschnitts in die Hülse hergestellt, ohne dass hierzu eine Drehbewegung erforderlich ist. Gleichzeitig wird beim Stecken auch eine axiale Sicherung gegen ein Herausziehen des Rohrabschnitts aus der Hülse realisiert, was durch das Zusammenwirken zwischen Hülse, Rohrabschnitt und Rastring erfolgt. Diese Ausziehsicherung kann durch Verdrehen von Hülse und Rohrabschnitt zueinander gelöst bzw. entsichert werden, so dass der Rohrabschnitt dann wieder ohne weiteres aus der Hülse herausgezogen werden kann.

Im Rahmen einer Serienmontage, beispielsweise von Fahrzeugen, lassen sich mit Hilfe dieser Kupplungseinrichtung somit Leitungen miteinander oder mit Anschlüssen einfach durch Stecken verbinden. Dies lässt sich auch bei sehr beengten und/oder schlecht einsehbaren Einbausituationen vergleichsweise rasch realisieren. Hierzu befindet sich beispielsweise der Rohrabschnitt an einer Fluidleitung, während sich die Hülse an einer anderen Fluidleitung oder an einem Fluidanschluss befindet.

Bei einer besonders vorteilhaften Ausführungsform kann die Kupplungseinrichtung zwei Rohrabschnitte und zwei Rastringe aufweisen, die mit einer gemeinsamen Hülse zusammenwirken. Dabei ist der eine Rohrabschnitt auf der einen Seite in die Hülse einsteckbar und mit dem einen Rastring sicherbar, während der andere Rohrabschnitt auf der anderen Seite in die Hülse einsteckbar und mit dem anderen Rastring sicherbar ist. Beispielsweise können auf diese Weise zwei Fluidleitungen jeweils mit einem solchen Rohrabschnitt versehen werden und jeweils durch axiales Stecken, also ohne Drehbewegung über die Hülse miteinander fluidisch gekoppelt werden. Zum Lösen dieser Verbindung muss dann nur die Hülse relativ zu den beiden Rohrabschnitten verdreht werden, bis beide Rohrabschnitte entsichert sind, so dass sie wieder axial aus der Hülse herausziehbar sind. Auf diese Weise können auch Leitungen einfach miteinander verbunden und wieder voneinander getrennt werden, die nicht oder nur gegen hohen Widerstand verdrehbar sind.

Weitere wichtige Merkmale und Vorteile der Erfindung ergeben sich aus den Unteransprüchen, aus den Zeichnungen und aus der zugehörigen Figurenbeschreibung anhand der Zeichnungen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: einen stark vereinfachten Längsschnitt durch eine Kupplungseinrichtung,
- Fig. 2: einen Längsschnitt wie in Fig. 1, jedoch bei einer anderen Ausführungsform,
- Fig. 3: eine perspektivische Ansicht auf eine Hülse der Kupplungseinrichtung,
- Fig. 4: eine perspektivische Ansicht mit in die Hülse eingesteckten Rohrabschnitten,
- Fig. 5: eine perspektivische Ansicht eines Rohrabschnitts.

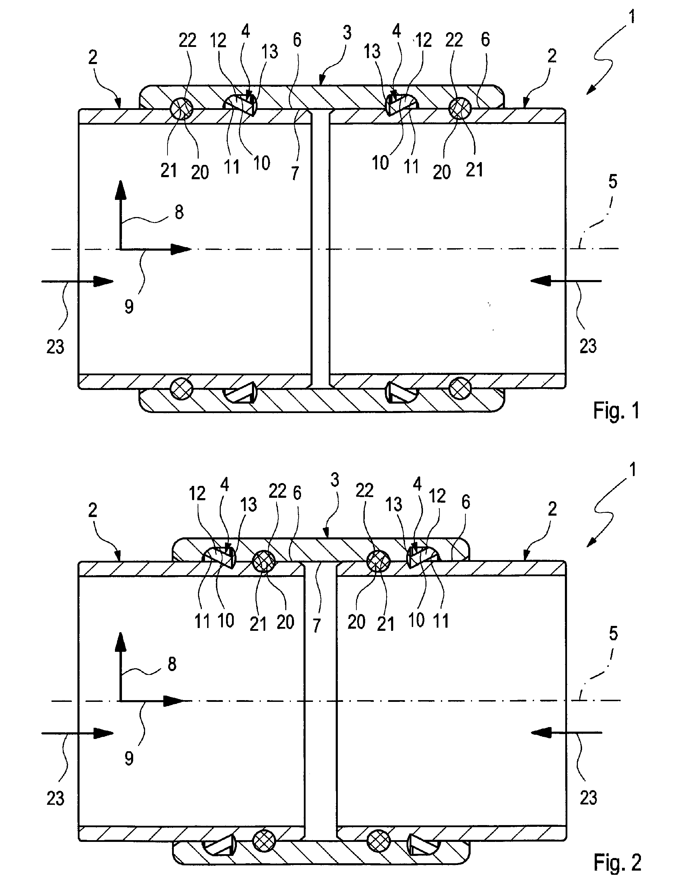

Entsprechend den Fig. 1 und 2 umfasst eine Kupplungseinrichtung 1 zumindest einen Rohrabschnitt 2, eine Hülse 3 sowie wenigstens einen Rastring 4. Bei den gezeigten Ausführungsformen weist die Kupplungseinrichtung 1 zwei Rohrabschnitte 2 und zwei Rastringe 4 auf, die mit einer gemeinsamen Hülse 3 zusammenwirken. Bei einer anderen Ausführungsform kann die Kupplungseinrichtung 1 so ausgestaltet sein, dass sie die Hülse 3 und nur einen einzigen Rohrabschnitt 2 und nur einen einzigen Rastring 4 aufweist. Diese einfache Variante kann beispielsweise an einer senkrecht zu einer Längsmittelachse 5 der Kupplungseinrichtung verlaufenden Ebene gespiegelt werden, um die hier gezeigte doppelte Variante zu realisieren. Ebenso sind grundsätzlich auch Bauformen mit mehr als zwei Rohrabschnitten 2 und mehr als zwei Rastringen 4 denkbar, beispielsweise kann die Hülse 3 als Y-förmiges Gehäuse mit drei Verbindungsstellen oder als X-förmiges Gehäuse mit vier Verbindungsstellen oder als sternförmiges Gehäuse mit noch mehr Verbindungsstellen ausgestaltet sein.

Die Kupplungseinrichtung 1 dient zum Verbinden einer hier nicht gezeigten ein Fluid, insbesondere ein Gas oder eine Flüssigkeit, führenden Leitung, also einer Fluidleitung mit einer anderen Fluidleitung oder mit einem Fluidanschluss, über den die jeweilige Fluidleitung z.B. an eine Fluidquelle oder an eine Fluidsenke anschließbar ist. Die jeweilige Fluidleitung bzw. der jeweilige Fluidanschluss sind hier nicht dargestellt. Die jeweilige Fluidleitung ist auf geeignete Weise mit dem jeweiligen Rohrabschnitt 2 fest verbunden. Ebenso kann der jeweilige Rohrabschnitt 2 einen integral an der jeweiligen Fluidleitung ausgebildeten Endabschnitt bilden. Ebenso kann die Hülse 3 mit der entsprechenden Fluidleitung fest verbunden sein oder einen daran integral ausgeformten Endabschnitt bilden. Entsprechendes gilt auch für den gegebenenfalls vorhandenen Fluidanschluss, der entweder mit der Hülse 3 oder mit dem jeweiligen Vorabschnitt 2 fest verbunden oder damit integral ausgestattet ist.

Der jeweilige Rohrabschnitt 2 besitzt eine kreiszylindrische Außenkontur 6. Die Hülse 3 besitzt eine kreiszylindrische Innenkontur 7, die komplementär zur jeweiligen Außenkontur 6 ausgestaltet ist, derart, dass der jeweilige Rohrabschnitt 2 axial in die Hülse 3 einsteckbar ist. Im Wesentlichen entspricht dabei die Innenkontur 7 bis auf ein gewisses Radialspiel der jeweiligen Außenkontur 6. In den gezeigten Beispielen sind die Querschnitte der beiden Rohrabschnitte 2 gleich groß gewählt. Es ist klar, dass bei einer anderen Ausführungsform grundsätzlich auch unterschiedlich große Querschnitte für die Außenkonturen 6 der beiden Rohrabschnitte 2 realisierbar sind. Die Hülse 3 besitzt dann z.B. eine Innenkontur 7, die an zwei Axialabschnitten unterschiedliche Querschnitte aufweist. In den gezeigten Beispielen ist ferner die Außenkontur 6 des jeweiligen Rohrabschnitts 2 in axialer Richtung im Wesentlichen mit einem konstanten Querschnitt ausgestattet. Bei einer anderen Ausführungsform ist auch ein in axialer Richtung einfach oder mehrfach gestufter Querschnittsverlauf für die jeweilige Außenkontur 6 denkbar. Komplementär dazu ist dann auch die Innenkontur 7 bzw. der jeweilige Abschnitt der Innenkontur 7 gestaltet.

Der jeweilige Rastring 4 befindet sich radial zwischen Hülse 3 und dem jeweiligen Rohrabschnitt 2, wenn der jeweilige Rohrabschnitt 2 in die Hülse 3 axial eingesteckt ist. Die radiale Richtung ist in den Fig. 1 und 2 durch einen Pfeil 8 bezeichnet, während mit einem Pfeil 9 die axiale Richtung bezeichnet ist.

Die Hülse 3, der jeweilige Rastring 4 und der jeweilige Rohrabschnitt 2 sind so ausgestaltet und so aufeinander abgestimmt, dass der jeweilige Rohrabschnitt 2 in einer ersten relativen Drehlage zwischen Rohrabschnitt 2 und Hülse 3 axial in die Hülse 3 einsteckbar ist, und zwar soweit, bis der jeweilige Rohrabschnitt 2 über den zugehörigen Rastring 4 mit der Hülse 3 verrastet. Durch diese Verrastung wird der jeweilige Rohrabschnitt 2 in der ersten Drehlage durch den jeweiligen Rastring 4 in der Hülse 3 gegen ein axiales Herausziehen gesichert. Bemerkenswert ist dabei, dass zum Einkuppeln, also zum Herstellen der fluidischen Verbindung zwischen Hülse 3 und Rohrabschnitt 2 keine Drehbewegung um die Längsmittelachse 5 zwischen Hülse 3 und Rohrabschnitt 2 durchgeführt werden muss. Des Weiteren sind die Hülse 3, der jeweilige Rohrabschnitt 2 und der jeweilige Rastring 4 so aufeinander abgestimmt bzw. ausgestaltet, dass die Hülse 3 und der jeweilige Rohrabschnitt 2 im eingesteckten Zustand relativ zueinander um die Längsmittelachse 5 verdrehbar sind, derart, dass eine zweite relative Drehlage zwischen der Hülse 3 und dem jeweiligen Rohrabschnitt 2 einstellbar ist, die von der ersten Drehlage abweicht und in der es möglich ist, den jeweiligen Rohrabschnitt 2 aus der Hülse 3 axial herauszuziehen. Auf diese Weise kann somit die fluidische Verbindung zwischen Hülse 3 und Rohrabschnitt 2 ausgekuppelt werden. Durch das Verdrehen zwischen Hülse 3 und Rohrabschnitt 2 kann die mit Hilfe des Rastrings 4 hergestellte Verrastung bzw. Sicherung gelöst werden, um das axiale Herausziehen des Rohrabschnitts 2 zu ermöglichen.

Der jeweilige Rastring 4 ist zweckmäßig in eine Ringnut 10 eingesetzt, die radial offen ist. Bei den gezeigten Beispielen ist die jeweilige Ringnut 10 an der Innenkontur 7 der Hülse 3 ausgebildet. Bei einer anderen Ausführungsform kann die Ringnut 10 ebenso an der Außenseite 6 des jeweiligen Rohrabschnitts 2 ausgebildet sein. Der in die jeweilige Ringnut 10 eingesetzte Rastring 4 ist an einer Nutwand 11 axial abgestützt, welche die Ringnut 10 axial begrenzt. Hierdurch kann eine intensive Kraftübertragung zwischen Rastring 4 und jeweiliger Nutwand 11 realisiert werden.

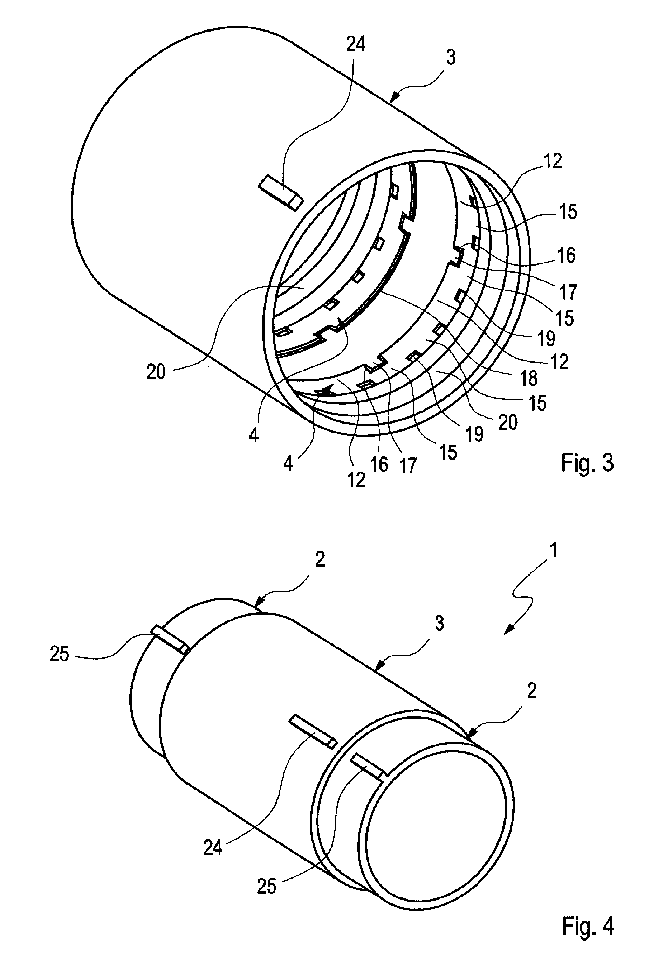

Der jeweilige Rastring 4 besitzt bei den hier gezeigten Ausführungsformen mehrere Rastsegmente 12, die entsprechend Fig. 3 in Umfangsrichtung zueinander benachbart angeordnet sind. Die Rastsegmente 12 sind am jeweiligen Rastring 4 radial federelastisch nachgiebig angeordnet. Ferner sind sie so dimensioniert, dass sie aus der jeweiligen Ringnut 10 radial herausragen bzw. vorstehen. Im eingesteckten Zustand des jeweiligen Rohrabschnitts 2 und bei Vorliegen der ersten Drehlage zwischen der Hülse 3 und dem jeweiligen Rohrabschnitt 2 greifen die Rastsegmente 12 jeweils in eine Rastkontur 13 ein und stützen sich daran in axialer Richtung 9 ab. Hierdurch kann ebenfalls eine intensive Kraftübertragung zwischen dem jeweiligen Rastring 4 und der zugehörigen Rastkontur 13 realisiert werden. In den gezeigten Beispielen ist die jeweilige Rastkontur 13 an der Außenseite 6 des jeweiligen Rohrabschnitts 2 ausgebildet. Ebenso ist eine Ausführungsform denkbar, bei welcher die jeweilige Rastkontur 13 an der Innenseite 7 der Hülse 6 ausgebildet ist.

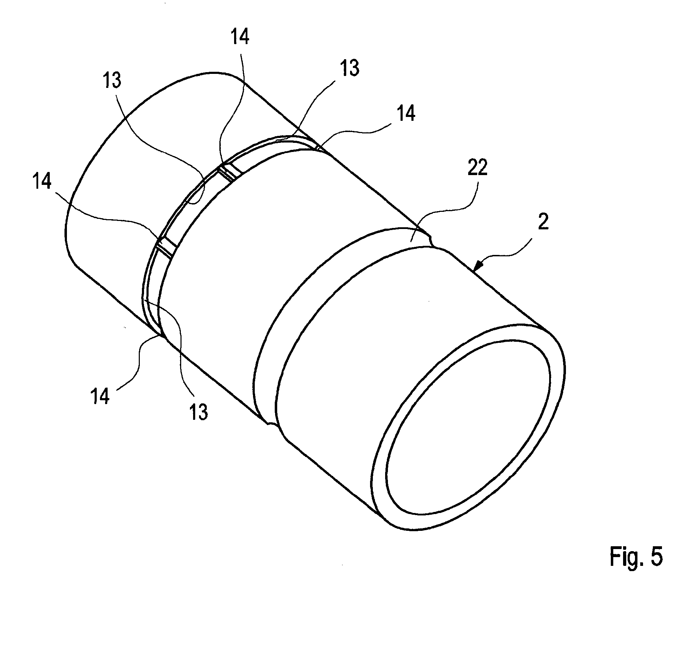

Um den jeweiligen Rohrabschnitt 2 aus der Hülse 3 wieder herausziehen zu können, müssen die Rastsegmente 12 aus den Rastkonturen 13 herausbewegt werden. Zu diesem Zweck sind geeignete Rückstellkonturen 14 vorgesehen, die gemäß Fig. 5 beispielsweise am jeweiligen Rohrabschnitt 2 ausgebildet sein können. Alternativ können die Rückstellkonturen 14 auch an der Hülse 3 vorgesehen sein. Jedenfalls befinden sie sich hier an dem Bauteil, das auch die Rastkonturen 13 aufweist. Zweckmäßig befinden sich diese Rückstellkonturen 14 auf der gleichen axialen Höhe wie die Rastkonturen 13, also im gleichen Axialabschnitt, wobei sich jeweils eine Rückstellkontur 14 in Umfangsrichtung zwischen zwei benachbarten Rastkonturen 13 befindet. Hierdurch sind die Rückstellkonturen 14 im eingesteckten Zustand in der ersten Drehlage auch in Umfangsrichtung zwischen zwei benachbarten Rastsegmenten 12 des Rastrings 4 positioniert. Durch Verdrehen von Hülse 3 und Rohrabschnitt 2 zwingen bzw. drücken die Rückstellkonturen 14 die Rastsegmente 12 in die Ringnut 10 ein. Die Rückstellkonturen 14 sind dabei so dimensioniert, dass sie die Rastsegmente 12 soweit in die Ringnut 10 eindrücken, dass sie von der jeweiligen Rastkontur 13 freikommen bzw. herauskommen. Um das Überführen von der ersten Drehlage in die zweite Drehlage zu vereinfachen, können die Rückstellkonturen 14 in der Umfangsrichtung Anlaufschrägen oder Rampen aufweisen. Zusätzlich oder alternativ können auch die Rastsegmente 12 in der Umfangsrichtung mit Anlaufschrägen oder Rampen versehen sein, die ein Einfahren oder Unterfahren der Rückstellkonturen 14 unter die Rastsegmente 12 erleichtern.

Sobald durch Verdrehen von Hülse 3 und Rohrabschnitt 2 die zweite Drehlage erreicht ist, drücken die Rückstellkonturen 14 die Rastsegmente 12 soweit in die Ringnut 10 hinein bzw. soweit aus den Rastkonturen 13 heraus, dass der Rohrabschnitt 2 entsichert und axial aus der Hülse 3 herausziehbar ist.

Entsprechend Fig. 3 kann der jeweilige Rastring 4 entsprechend einer bevorzugten Ausführungsform mehrere Stützsegmente 15 aufweisen, die an einer von den Rastsegmenten 12 axial abgewandten Seite des Rastrings 4 angeordnet sind und die in der Umfangsrichtung zueinander benachbart sind. Die Stützsegmente 15 stützen sich innerhalb der Ringnut 10 an der Nutwand 11 axial ab. Der Rastring 4 weist in der Umfangsrichtung zumindest zwischen zwei benachbarten Rastsegmenten 12 jeweils eine Aussparung 16 auf. Innerhalb der Ringnut 10 können nun Vorsprünge 17 vorgesehen sein, welche jeweils in eine solche Aussparung 16 axial und radial eingreifen. Dabei steht der jeweilige Vorsprung 17 beispielsweise von einer die Ringnut 10 axial begrenzenden Nutwand 18 vor. Durch den Eingriff der Vorsprünge 17 in die Aussparungen 16 ergibt sich eine Drehsicherung für den Rastring 4 relativ zur Ringnut 10, hier somit relativ zur Hülse 3. Auf entsprechende Weise kann auch in Umfangsrichtung zumindest zwischen zwei benachbarten Stützsegmenten 15 jeweils eine axiale Aussparung 19 vorgesehen sein. Grundsätzlich können an der Nutwand 11, an welcher sich die Stützsegmente 15 axial abstützen, ebenfalls hier nicht gezeigte Vorsprünge vorgesehen sein, welche in die Aussparungen 19 eingreifen, um den Rastring 4 gegen Verdrehen innerhalb der Ringnut 10 zu sichern. Des Weiteren erzeugen die Aussparungen 16 zwischen den Rastsegmenten 12 und die Aussparungen 19 zwischen den Stützsegmenten 15 eine erhöhte Federelastizität innerhalb des Rastrings 4. Diese Federelastizität ermöglicht bzw. begünstigt den Einbau des Rastrings 4 und begünstigt die Federelastizität bzw. die radiale Nachgiebigkeit der Rastsegmente 12.

Entsprechend den Fig. 1 bis 3 kann die Kupplungseinrichtung 1 außerdem mit wenigstens einer Dichtung 20 ausgestattet sein, die ringförmig ausgestaltet ist und die radial wirkt. Im Beispiel sind zwei derartige Dichtungen 20 vorgesehen, die jeweils einem der Rohrabschnitte 2 zugeordnet sind. Bei der in Fig. 1 gezeigten Ausführungsform sind die Dichtungen 20 bezüglich einer mit einem Pfeil angedeuteten Einsteckrichtung 23 vor dem jeweiligen Rastring 4 positioniert. Bei der in Fig. 2 gezeigten Ausführungsform befinden sich die Dichtungen 20 bzgl. der Einsteckrichtung 23 nach dem jeweiligen Rastring 4. Zur Fixierung der Dichtungen 20 am jeweiligen Rohrabschnitt 2 und an der Hülse 3, können sowohl die Hülse 3 als auch der jeweilige Rohrabschnitt 2 mit entsprechenden Aufnahmenuten 21 bzw. 22 ausgestattet sein, in welche die jeweilige Dichtung 20 jeweils etwa zur Hälfte eintaucht.

Gemäß Fig. 4 können die Hülse 3 und der jeweilige Rohrabschnitt 2 mit Markierungen 24 bzw. 25 ausgestattet sein. Diese sind insbesondere als haptisch ertastbare Markierungen 24, 25 ausgestaltet, hier sind sie exemplarisch integral an der Hülse 3 bzw. am jeweiligen Rohrabschnitt 2 ausgeformt und beispielsweise sind sie als Stege ausgestaltet, die sich in Längs- oder Axialrichtung 9 erstrecken. Sind sie - wie in Fig. 4 dargestellt - zueinander fluchtend ausgerichtet, liegt jeweils die erste relative Drehlage zwischen der Hülse 3 und dem jeweiligen Rohrabschnitt 2 vor.

Bei der jeweiligen Fluidleitung kann es sich um eine Rohrleitung oder um eine Schlauchleitung handeln. Der jeweilige Rohrabschnitt 2 und/oder der jeweilige Rastring 4 und/oder die Hülse 3 kann/können aus Metall bzw. aus Kunststoff hergestellt sein.

## Patentansprüche

1. Kupplungseinrichtung zum Verbinden einer Fluidleitung mit einer anderen Fluidleitung oder mit einem Fluidanschluss,
- mit wenigstens einem Rohrabschnitt (2), der eine kreiszylindrische Außenkontur (6) aufweist,
- mit einer Hülse (3), die eine kreiszylindrische Innenkontur (7) aufweist,
- mit mindestens einem Rastring (4), der bei in die Hülse (3) eingestecktem Rohrabschnitt (2) radial zwischen Hülse (3) und Rohrabschnitt (2) angeordnet ist,
- wobei Rastring (4), Hülse (3) und Rohrabschnitt (2) so ausgestaltet und aufeinander abgestimmt sind,
- dass der Rohrabschnitt (2) in einer ersten relativen Drehlage zwischen Rohrabschnitt (2) und Hülse (3) zum Einkuppeln axial in die Hülse (3) einsteckbar ist,
- dass der Rohrabschnitt (2) in der ersten Drehlage im eingesteckten Zustand durch den Rastring (4) gegen axiales Herausziehen gesichert ist,
- dass Hülse (3) und Rohrabschnitt (2) im eingesteckten Zustand relativ zueinander verdrehbar sind,
- dass der Rohrabschnitt (2) in einer von der ersten Drehlage abweichenden zweiten Drehlage zwischen Hülse (3) und Rohrabschnitt (2) zum Auskuppeln aus der Hülse (3) axial herausziehbar ist,
**dadurch gekennzeichnet,**
**dass** am jeweiligen Rohrabschnitt (2) oder an der Hülse (3) Rückstellkonturen (14) vorgesehen sind, die beim Überführen des jeweiligen Rohrabschnitts (2) und der Hülse (3) von der ersten Drehlage in die zweite Drehlage den jeweiligen Rastring (4) deaktivieren, so dass der jeweilige Rohrabschnitt (2) entsichert ist und axial aus der Hülse (3) herausziehbar ist.

2. Kupplungseinrichtung nach Anspruch 1,
**dadurch gekennzeichnet,**
**dass** der Rastring (4) in eine radial offene Ringnut (10) eingesetzt ist und an einer die Ringnut (10) axial begrenzenden Nutwand (11) axial abgestützt ist.

3. Kupplungseinrichtung nach Anspruch 2,
**dadurch gekennzeichnet,**
**dass** der Rastring (4) mehrere in Umfangsrichtung benachbarte Rastsegmente (12) aufweist, die am Rastring (4) radial federelastisch nachgiebig angeordnet sind, die aus der Ringnut (10) herausragen und die im eingesteckten Zustand in der ersten Drehlage jeweils in eine Rastkontur (13) eingreifen und sich daran axial abstützen.

4. Kupplungseinrichtung nach Anspruch 3,
**dadurch gekennzeichnet,**
**dass** die Rastsegmente (12) im eingesteckten Zustand beim Überführen des jeweiligen Rohrabschnitts (2) und der Hülse (3) von der ersten Drehlage in die zweite Drehlage durch Rückstellkonturen (14) soweit in die Ringnut (10) eingedrückt werden, dass die Rastsegmente (12) von den Rastkonturen (13) freikommen.

5. Kupplungseinrichtung nach Anspruch 4,
**dadurch gekennzeichnet,**
**dass** die Rückstellkonturen (14) auf axialer Höhe der Rastkonturen (13) in Umfangsrichtung zwischen benachbarten Rastkonturen (13) angeordnet sind.

6. Kupplungseinrichtung nach Anspruch 4 oder 5,
**dadurch gekennzeichnet,**
**dass** in Umfangsrichtung benachbarte Rastsegmente (12) soweit voneinander beabstandet sind, dass sich jeweils eine Rückstellkontur (14) in der ersten Drehlage im eingesteckten Zustand auf axialer Höhe der Rastsegmente (12) zwischen zwei benachbarten Rastsegmenten (12) befindet.

7. Kupplungseinrichtung nach einem der Ansprüche 3 bis 6,
**dadurch gekennzeichnet,**
**dass** der Rastring (4) auf einer von den Rastsegmenten (12) axial abgewandten Seite mehrere in Umfangsrichtung benachbarte Stützsegmente (15) aufweist, die sich innerhalb der Ringnut (10) an der Nutwand (11) axial abstützen.

8. Kupplungseinrichtung nach einem der Ansprüche 3 bis 7,
**dadurch gekennzeichnet,**
**dass** der Rastring (4) in Umfangsrichtung zumindest zwischen zwei benachbarten Stützsegmenten (15) und/oder in Umfangsrichtung zumindest zwischen zwei benachbarten Rastsegmenten (12) eine axiale Aussparung (16, 19) aufweist, in welche ein Vorsprung (17) axial eingreift, der von einer die Ringnut (10) axial begrenzenden Nutwand (18) axial vorsteht.

9. Kupplungseinrichtung nach einem der Ansprüche 1 bis 8,
**dadurch gekennzeichnet,**
**dass** zwei Rohrabschnitte (2) und zwei Rastringe (4) vorgesehen sind, wobei der eine Rohrabschnitt (2) auf der einen Seite in die Hülse (3) einsteckbar und mit dem einen Rastring (4) sicherbar ist, während der andere Rohrabschnitt (2) auf der anderen Seite in die Hülse (3) einsteckbar und mit dem anderen Rastring (4) sicherbar ist.

10. Kupplungseinrichtung nach einem der Ansprüche 1 bis 9,
**dadurch gekennzeichnet,**
- **dass** die Ringnut (10) an der Innenkontur (7) der Hülse (3) ausgebildet ist, während die Rastkonturen (13) an der Außenseite (6) des Rohrabschnitts (2) ausgebildet sind, oder
- **dass** die Ringnut (10) an der Außenseite (6) des Rohrabschnitts (2) ausgebildet ist, während die Rastkonturen (13) an der Innenseite (7) der Hülse (3) ausgebildet sind.

11. Kupplungseinrichtung nach einem der Ansprüche 1 bis 10,
**dadurch gekennzeichnet,**
**dass** zumindest eine ringförmige und radial wirkende Dichtung (20) vorgesehen ist, die bezüglich einer Einsteckrichtung (23) des Rohrabschnitts (2) vor oder nach dem zugehörigen Rastring (4) angeordnet ist.

12. Kupplungseinrichtung nach einem der Ansprüche 1 bis 11,
**dadurch gekennzeichnet,**
- **dass** der Rohrabschnitt (2) mit der Fluidleitung oder mit dem Fluidanschluss verbunden ist oder durch einen integral daran angeformten Endabschnitt gebildet ist, und/oder
- **dass** die Hülse (3) mit der Fluidleitung oder mit dem Fluidanschluss verbunden ist oder durch einen integral daran angeformten Endabschnitt gebildet ist.

## Claims

1. Coupling device for connecting a fluid line to another fluid line or to a fluid connection,
- comprising at least one tube portion (2), which has a circular cylindrical outer contour (6),
- comprising a casing (3), which has a circular cylindrical inner contour (7),
- comprising at least one detent ring (4), which is arranged radially between the casing (3) and the tube portion (2) when the tube portion (2) is inserted in the casing (3),
- the detent ring (4), the casing (3) and the tube portion (2) being configured and adjusted to one another such that
- the tube portion (2) can be axially inserted into the casing (3) in a first relative rotational position of the tube portion (2) and the casing (3) for the purpose of coupling,
- in the inserted state in the first rotational position, the tube portion (2) is secured by the detent ring (4) against axial withdrawal,
- the casing (3) and tube portion (2) can be rotated relative to one another in the inserted state such that,
- for decoupling purposes, the tube portion (2) can be withdrawn axially from the casing (3) in a second rotational position of the casing (3) and the tube portion (2) that differs from the first rotational position,
**characterised in that**
reset contours (14) are provided on each tube portion (2) or on the casing (3) which deactivate the respective detent ring (4) during the transition of each tube portion (2) and the casing (3) from the first rotational position into the second rotational position, such that each tube portion (2) is disengaged and can be axially removed from the casing (3).

2. Coupling device according to claim 1, **characterised in that** the detent ring (4) is inserted into a radially open annular groove (10) and is axially supported on a groove wall (11) which axially delimits the annular groove (10).

3. Coupling device according to claim 2, **characterised in that** the detent ring (4) comprises a plurality of detent segments (12) which are adjacent in the circumferential direction and are radially arranged on the detent ring (4) in a spring-elastically flexible manner, project from the annular groove (10) and, in the inserted state in the first rotational position, each engage in a detent contour (13) and are axially supported thereon.

4. Coupling device according to claim 3, **characterised in that**, in the inserted state, during the transition of each tube portion (2) and the casing (3) from the first rotational position into the second rotational position, the detent segments (12) are pressed by reset contours (14) into the annular groove (10) to such an extent that the detent segments (12) are released from the detent contours (13).

5. Coupling device according to claim 4, **characterised in that** the reset contours (14) are arranged at the axial height of the detent contours (13) in the circumferential direction between adjacent detent contours (13).

6. Coupling device according to either claim 4 or claim 5, **characterised in that** detent segments (12) which are adjacent in the circumferential direction are spaced apart from one another at such a distance that, in the first rotational position in the inserted state, one reset contour (14) is located in each case at the axial height of the detent segments (12) between two adjacent detent segments (12).

7. Coupling device according to any of claims 3 to 6, **characterised in that**, on a side facing axially away from the detent segments (12), the detent ring (4) has a plurality of support segments (15) arranged adjacently in the circumferential direction and are axially supported within the annular groove (10) on the groove wall (11).

8. Coupling device according to any of claims 3 to 7, **characterised in that** the detent ring (4) has an axial recess (16, 19) in the circumferential direction at least between two adjacent support segments (15) and/or in the circumferential direction at least between two adjacent detent segments (12), in which recess a projection (17) engages axially, which projection projects axially from a groove wall (18) axially delimiting the annular groove (10).

9. Coupling device according to any of claims 1 to 8, **characterised in that** two tube portions (2) and two detent rings (4) are provided, it being possible for one tube portion (2) to be inserted on one side into the casing (3) and secured by one detent ring (4), while the other tube portion (2) can be inserted on the other side into the casing (3) and can be secured by the other detent ring (4).

10. Coupling device according to any of claims 1 to 9, **characterised in that**
- the annular groove (10) is formed on the inner contour (7) of the casing (3), while the detent contours (13) are formed on the outside (6) of the tube portion (2), or **in that**
- the annular groove (10) is formed on the outside (6) of the tube portion (2), while the detent contours (13) are formed on the inside (7) of the casing (3).

11. Coupling device according to any of claims 1 to 10, **characterised in that** at least one annular and radially acting seal (20) is provided, which is arranged before or after the associated detent ring (4) with respect to an insertion direction (23) of the tube portion (2).

12. Coupling device according to any of claims 1 to 11, **characterised in that**
- the tube portion (2) is connected to the fluid line or to the fluid connection, or is formed by an end portion integrally formed thereon, and/or **in that**
- the casing (3) is connected to the fluid line or to the fluid connection or is formed by an end portion integrally formed thereon.

## Revendications

1. Dispositif d'accouplement destiné à connecter une conduite fluidique à une autre conduite fluidique ou à une connexion fluidique,
- avec au moins une section tubulaire (2) qui présente un contour extérieur cylindrique circulaire (6),
- avec un manchon (3), qui présente un contour intérieur cylindrique circulaire (7),
- avec au moins une bague de blocage (4), qui est disposée radialement entre le manchon (3) et la section tubulaire (2) lorsque la section tubulaire (2) est insérée dans le manchon (3),
- la bague de blocage (4), le manchon (3) et la section tubulaire (2) étant conçus et coordonnés les uns avec les autres de telle manière
- que la section tubulaire (2) puisse être insérée axialement dans le manchon (3), à des fins d'accouplement, dans une première position de rotation relative entre la section tubulaire (2) et le manchon (3),
- que la section tubulaire (2) soit verrouillée contre tout retrait axial par la bague de blocage (4), dans la première position de rotation à l'état inséré,
- que le manchon (3) et la section tubulaire (2) puissent pivoter l'un par rapport à l'autre à l'état inséré,
- que la section tubulaire (2) puisse être retirée axialement du manchon (3), à des fins de désaccouplement, dans une deuxième position de rotation entre le manchon (3) et la section tubulaire (2), différente de la première position de rotation,
**caractérisé en ce que**
des contours de rappel (14) sont prévus au niveau de la section tubulaire (2) respective ou au niveau du manchon (3), qui désactivent la bague de blocage (4) respective lors du transfert de la section tubulaire (2) respective et du manchon (3) de la première position de rotation vers la deuxième position de rotation, de telle manière que la section tubulaire (2) respective soit déverrouillée et puisse être retirée axialement du manchon (3).

2. Dispositif d'accouplement selon la revendication 1,
**caractérisé en ce que**
la bague de blocage (4) est insérée dans une rainure pour bague de blocage (10) ouverte radialement et est soutenue axialement au niveau d'une paroi rainurée (11) limitant axialement la rainure pour bague de blocage (10).

3. Dispositif d'accouplement selon la revendication 2,
**caractérisé en ce que**
la bague de blocage (4) présente plusieurs segments de blocage (12) adjacents dans le sens de la circonférence, qui sont disposés de manière souple radialement et avec l'élasticité d'un ressort au niveau de la bague de blocage (4) et qui dépassent de la rainure pour bague de blocage (10) et qui s'engrènent respectivement dans un contour de blocage (13), à l'état inséré dans la première position de rotation, et s'appuient dessus axialement.

4. Dispositif d'accouplement selon la revendication 3,
**caractérisé en ce que**
les segments de blocage (12) sont si comprimés dans la rainure pour bague de blocage (10) par des contours de rappel (14), à l'état inséré lors du transfert de la section tubulaire (2) respective et du manchon (3) de la première position de rotation vers la deuxième position de rotation, que les segments de blocage (12) se libèrent des contours de blocage (13).

5. Dispositif d'accouplement selon la revendication 4,
**caractérisé en ce que**
les contours de rappel (14) sont disposés entre des contours de blocage (13) adjacents à la hauteur axiale des contours de blocage (13) dans le sens de la circonférence.

6. Dispositif d'accouplement selon la revendication 4 ou 5,
**caractérisé en ce que**
des segments de blocage (12) adjacents dans le sens de la circonférence sont si espacés les uns des autres qu'un contour de rappel (14) se trouve respectivement entre deux segments de blocage (12) adjacents, dans la première position de rotation à l'état inséré, à la hauteur axiale des segments de blocage (12).

7. Dispositif d'accouplement selon l'une des revendications 3 à 6,
**caractérisé en ce que**
la bague de blocage (4) présente, sur un côté situé axialement à l'opposé des segments de blocage (12), plusieurs segments de soutien (15) adjacents dans le sens de la circonférence, qui se supportent axialement à l'intérieur de la rainure pour bague de blocage (10), au niveau de la paroi rainurée (11).

8. Dispositif d'accouplement selon l'une des revendications 3 à 7,
**caractérisé en ce que**
la bague de blocage (4) présente, tout au moins entre deux segments de soutien (15) adjacents dans le sens de la circonférence et/ou tout au moins entre deux segments de blocage (12) adjacents dans le sens de la circonférence une cavité axiale (16, 19), dans laquelle une projection (17) s'engage axialement et dépasse axialement d'une paroi rainurée (18) limitant axialement la rainure pour bague de blocage (10).

9. Dispositif d'accouplement selon l'une des revendications 1 à 8,
**caractérisé en ce que**
deux parties tubulaires (2) et deux bagues de blocage (4) sont prévues, l'une des parties tubulaires (2) pouvant être insérée dans le manchon (3) sur l'un des côtés et bloquée au moyen de l'une des bagues de blocage (4), tandis que l'autre section tubulaire (2) peut être insérée dans le manchon (3) sur l'autre côté et peut être bloquée au moyen de l'autre bague de blocage (4).

10. Dispositif d'accouplement selon l'une des revendications 1 à 9,
**caractérisé en ce que**
- la rainure pour bague de blocage (10) est formée au niveau du contour intérieur (7) du manchon (3), tandis que les contours de blocage (13) sont formés au niveau du côté extérieur (6) de la section tubulaire (2), ou **caractérisé en ce que**
- la rainure pour bague de blocage (10) est formée au niveau du côté extérieur (6) de la section tubulaire (2), tandis que les contours de blocage (13) sont formés au niveau du côté intérieur (7) du manchon (3).

11. Dispositif d'accouplement selon l'une des revendications 1 à 10,
**caractérisé en ce que**
au moins un joint d'étanchéité (20) circulaire et agissant radialement est prévu et disposé avant ou après la bague de blocage (4) attenante, par rapport à un sens d'insertion (23) de la section tubulaire (2).

12. Dispositif d'accouplement selon l'une des revendications 1 à 11,
**caractérisé en ce que**
- la section tubulaire (2) est reliée à la conduite fluidique ou à la connexion fluidique, ou est formée par une section d'extrémité intégralement moulée à elle, et/ou
- le manchon (3) est relié à la conduite fluidique ou à la connexion fluidique, ou est formé par une section d'extrémité intégralement moulée à lui.
